# FASCICULE DE BREVET EUROPEEN

(11) **EP 3 200 621 B1**
(45) Date de publication et mention de la délivrance du brevet: **10.04.2019**
(21) Numéro de dépôt: 15771906.3
(22) Date de dépôt: 23.09.2015
(51) Int. Cl.: A23L 33/10, A23L 33/00

(54) **ALIMENT THERAPEUTIQUE PRET A L'EMPLOI ET SON PROCEDE DE FABRICATION**
GEBRAUCHSFERTIGES THERAPEUTISCHES LEBENSMITTEL, UND SEIN HERSTELLUNGSVERFAHREN
READY-TO-USE THERAPEUTIC FOOD PRODUCT AND METHOD FOR MANUFACTURING SAME

(30) Priorité: 29.09.2014 EP 14306513
(43) Date de publication de la demande: 09.08.2017
(73) Titulaire: Compagnie d'Exploitation des Services Auxiliaires Aeriens (SERVAIR), 95726 Roissy CDG Cedex (FR)
(72) Inventeur: CHESNAIS-BED'HOM, Nathalie, F-92160 Antony (FR); CORTIANA, Catherine, F-77230 Dammartin en Goele (FR)
(74) Mandataire: Kessler, Marc
(86) Numéro de dépôt international: PCT/EP2015/071842
(87) Numéro de publication internationale: WO 2016/050578

(56) Documents cités:
- EP-A1- 0 223 963
- EP-A1- 1 151 676
- WO-A1-02/34077
- WO-A1-2011/134885
- WO-A1-2015/130678
- WO-A2-2013/057400
- FR-A- 1 303 900
- FR-A1- 2 815 825
- AMAGLOH FRANCIS KWEKU ET AL: "Sweet potato-based complementary food for infants in low-income countries", FOOD AND NUTRITION BULLETIN, UNITED NATIONS UNIVERSITY PRESS, TOKYO, JP, vol. 33, no. 1, 1 mars 2012 (2012-03-01), pages 3-10, XP008175612, ISSN: 0379-5721 cité dans la demande
- DATABASE WPI Week 201076 Thomson Scientific, London, GB; AN 2010-P07785 XP002737686, & CN 101 849 670 A (XU Y) 6 octobre 2010 (2010-10-06) cité dans la demande

## Description

### Objet de l'invention

La présente invention a trait à un aliment pour son utilisation en thérapie, prêt à l'emploi, principalement destiné à être utilisé pour le traitement et/ou la prévention de la malnutrition et/ou des états de malabsorption et autres affections nécessitant un enrichissement en énergie et protéines.

L'invention concerne également un procédé de préparation d'un tel aliment.

### Etat de la technique

Les aliments ou suppléments nutritionnels pour le traitement de la malnutrition sont bien connus.

Compte tenu des conditions de vie des populations souffrant de malnutrition, ce type d'aliment doit pouvoir être ingéré directement à partir de son conditionnement, en l'occurrence dans la plupart des cas un sachet, sans qu'il soit nécessaire de réaliser de traitement additionnel tel qu'une cuisson, un mélange préalable avec d'autres produits ou même une simple dilution dans un liquide.

De plus, ce type d'aliment constitue généralement tout ou partie de la nourriture des sujets dénutris, ce qui implique secondairement que les conditions de son ingestion soient compatibles avec le but poursuivi non seulement en termes de teneurs énergétique et nutritionnelle mais également en terme de dosage quantitatif pour respecter un schéma de distribution quotidien. Qualitativement et quantitativement, un tel aliment doit en somme être défini et conçu pour être complet et notamment utilisable dans des situations de crises. De plus, ce type d'aliment doit également présenter une texture homogène lui permettant d'être facilement ingérable par les enfants directement à partir de son conditionnement. En d'autres mots, l'aliment doit être suffisamment visqueux pour assurer sa tenue dans le sachet à l'ouverture, tout en étant suffisamment fluide pour être facilement expulsable du sachet, sans séparation de phase.

Il existe déjà des aliments ou suppléments nutritionnels disponibles sous forme de doses en sachets et qui sont présentés comme complets et susceptibles de couvrir la totalité des besoins nutritionnels d'un sujet. Ces doses ensachées ont progressivement remplacé les produits en poudre qui préexistaient, poudres à diluer - en général dans de l'eau - avant ingestion.

La nécessité de devoir disposer d'eau potable pour la préparation est clairement un inconvénient, et l'état pulvérulent du produit avant mélange, au cours des phases de transport et de stockage, crée problème car la surface maximalisée due à cet état augmente les risques de détérioration, en particulier par oxydation des lipides et de certaines vitamines qu'elles contiennent. Selon la qualité de l'eau utilisée et les conditions de stockage, notamment sous certains climats, la solution obtenue peut en pratique constituer un milieu favorable à la prolifération de bactéries pathogènes notamment lorsque les conditions d'hygiène sont insuffisantes. Par ailleurs, la nécessité d'une dilution restreint le choix de certains constituants, qui doivent être solubles pour avoir une chance d'être convenablement absorbés par le sujet.

Pour toutes ces raisons, il a été proposé des doses en sachets prêtes à l'emploi, comme celles qui sont par exemple décrites dans FR 2 771 259 ou FR 2 815 825. Ces documents décrivent un aliment de renutrition supposé couvrir les besoins nutritifs de sujets malnutris ou dénutris, qui se présente sous la forme d'une pâte ensachée pouvant être consommée directement, et dont la substance pâteuse est notamment basée sur des graines d'oléagineux, dont on sait qu'elles sont riches en lipides. En particulier, il est fait usage d'arachides, formant après traitement une substance riche en matière grasse végétale qui enrobe un mélange de produits en poudre, l'ensemble formant l'aliment décrit, qualifié de complet. Dans FR 2 815 825, la matière grasse également essentiellement végétale est raffinée, elle ne contient ni la partie protéique ni la partie glucidique non digestible, ni la partie minérale des graines d'oléagineux.

Le document WO2013057400 décrit, quant à lui, un supplément nutritionnel sous la forme d'une poudre ou d'une pâte comprenant des protéines, des lipides, des sucres et de minéraux et ayant une valeur d'énergie élevée d'au moins 400 kcal / 100 g, une osmolalité supérieure à 100 mOsm/kg, et la présence de monosaccharides représentant au moins 15% en poids du total des sucres présents dans le produit.

### Buts de l'invention

La présente invention vise à fournir un aliment pour son utilisation en thérapie qui ne présente pas les inconvénients de l'état de la technique.

La présente invention vise à fournir une solution alternative aux solutions existantes.

La présente invention vise à fournir de la nourriture hautement énergétique, riche en vitamines et minéraux et répondant aux besoins des populations dont ledit aliment peut le cas échéant être la seule source de nourriture, en particulier une population d'enfants de 6 mois à 6 ans souffrant de malnutrition aigüe sévère sans complications médicales.

La présente invention vise à fournir un aliment pour son utilisation en thérapie, présentant une texture homogène, pâteuse et molle, sans morceaux et pouvant être ingéré, sans mastication, directement à partir de son conditionnement sans traitement additionnel.

La présente invention vise à fournir un aliment pour son utilisation en thérapie, stable à température ambiante et qui a une durée de vie d'au moins 2 ans.

La présente invention vise également à fournir un procédé d'obtention d'un tel aliment.

La présente invention vise aussi à fournir un aliment pour son utilisation en thérapie, destiné à être utilisé pour le traitement et/ou la prévention de la malnutrition et/ou des états de malabsorption et autres affections nécessitant un enrichissement en énergie et protéines.

### Résumé de l'invention

La présente invention porte sur un aliment pour son utilisation en thérapie, prêt à l'emploi, et ne nécessitant aucune dilution avant consommation, comprenant, en pourcentages pondéraux par rapport au poids total dudit aliment, 5 à 45 % d'une farine d'une ou plusieurs céréales et/ou d'une poudre d'une ou plusieurs légumineuses et/ou une ou plusieurs tubercules et/ou une ou plusieurs racines, 10 à 35% de lait en poudre, 10 à 30% de sucre, 15 à 35% de matière grasse laitière animale ou d'origine animale, 0 à 20% de protéines en poudre, 0 à 10% d'un ou plusieurs émulsifiants.

Selon des modes préférés de l'invention, l'aliment selon l'invention comprend au moins une, ou une combinaison quelconque appropriée, des caractéristiques suivantes :
- la farine d'une ou plusieurs céréales varie de 0 à 20%, la poudre d'une ou plusieurs légumineuses varie de 0 à 20% et la poudre d'un ou plusieurs tubercules et/ou racines varie de 0 à 20%,
- la farine d'une ou plusieurs céréales représente entre 2 à 15%, la poudre d'une ou plusieurs légumineuses représente entre 2 à 15%, la poudre d'un ou plusieurs tubercules et/ou racines représente entre 2 à 15%,
- la poudre de légumineuses est de la poudre de haricots mungo et/ou de lentilles et/ou de soja,
- la farine de céréales est de la farine de riz et/ou de sorgho et/ou de mil,
- la poudre de tubercules et/ou racines est de la poudre de manioc et/ou de patate douce et/ou d'igname,
- la matière grasse laitière animale ou d'origine animale est, ou comprend, de l'huile de beurre ou de l'huile de beurre anhydre,
- la ou les farines et/ou poudres de céréales et/ou de légumineuses et/ou de tubercules et/ou de racines ont une granulométrie ne dépassant pas 0,3 mm, de préférence se situant entre 0,15 à 0,25 mm,
- le sucre est du saccharose ayant une granulométrie inférieure à 0,5 mm, de préférence une granulométrie est comprise entre 0,070 et 0,110 mm,
- tout ou partie du sucre est remplacée par de la maltodextrine,
- l'aliment comprend en outre un ou plusieurs antioxydants, un mélange vitaminique, un mélange de minéraux, un mélange d'acides gras essentiels, un ou plusieurs arômes, ou un mélange de ces composés,
- l'aliment a une viscosité, mesurée à 37°C, comprise entre 15 et 30 Pa.s, de préférence entre 18 et 24 Pa.s,

La présente invention porte aussi sur l'utilisation de l'aliment selon l'invention pour traiter et/ou prévenir la malnutrition et/ou les états de malabsorption et autres affections nécessitant un enrichissement en énergie et protéines.

La présente invention porte également sur un procédé d'obtention de l'aliment selon l'invention, comprenant une étape de mélange des composants de l'aliment selon l'invention, avant une étape de chauffage du mélange à une température comprise entre 65 et 95°C pendant une durée de 5 à 30 minutes, puis une étape de conditionnement du mélange dans un emballage.

Selon des modes préférés de l'invention, le procédé d'obtention de l'aliment selon l'invention comprend au moins une, ou une combinaison quelconque appropriée, des caractéristiques suivantes :
- la ou les farines de céréales et/ou la ou les poudres d'une ou plusieurs légumineuses et/ou tubercules et/ou racines sont préalablement chauffées à une température comprise entre 70°C à 100°C pendant une durée d'environ 2 à 10 min, après avoir été tamisées et mélangées,
- l'étape de mélange des composants de l'aliment comprend les étapes de mélanger la ou les farines et/ou poudres dans un broyeur ou un mélangeur chauffant, d'ajouter à la ou les farines et/ou poudres, le sucre, le lait en poudre, et éventuellement les protéines en poudre et/ou le complexe multivitaminé et minéral et/ou l'émulsifiant, afin d'obtenir un pré-mix, de mélanger le pré-mix de 4 à 6 min, de mélanger à part la matière grasse laitière animale ou d'origine animale et éventuellement le ou les antioxydants, d'ajouter dans le broyeur ou le mélangeur chauffant la matière grasse laitière, comprenant éventuellement le ou les antioxydants, d'ajouter éventuellement un ou plusieurs arômes.

### Description détaillée de l'invention

L'aliment selon l'invention est adapté à être ensaché en doses prêtes à l'emploi. En conservant à l'esprit la nécessité finale d'offrir des portions à haute valeur énergétique et nutritionnelle ainsi que d'obtenir un produit facilement ingérable par la population cible, les constituants sélectionnés présentent l'avantage de préserver les qualités intrinsèques du mélange, de limiter toutes sortes d'effets indésirables chez le consommateur, de préserver leurs qualités intrinsèques dans le mélange ou pour aboutir à un effet combiné favorable relativement aux objectifs fixés. Ainsi, les ingrédients choisis présentent des caractéristiques physiques adéquates à la température de leur usage, ils présentent l'avantage d'un apport nutritionnel adéquat, d'un potentiel allergène faible, de bonne tolérance, et permettent de limiter et/ou de gérer au mieux les facteurs antinutritionnels classiques tels que les glucosides cyanogéniques, phytates, oligosaccharides, inhibiteurs d'enzymes, tanins et polyphénols, acide oxalique, facteurs anti-trypsiques et mycotoxines pour l'essentiel.

L'aliment prêt à l'emploi selon l'invention comprend 10 à 35% en poids de lait en poudre, 10 à 30% en poids de sucre, 15 à 35% en poids de matière grasse laitière animale ou d'origine animale, de préférence de 26 à 30%, de 0 à 20% en poids de protéines en poudre, de préférence de 0 à 12% en poids, de 0 à 10% en poids d'un ou plusieurs émulsifiants et au moins une farine d'une ou plusieurs céréales ou une poudre d'une ou plusieurs légumineuses et/ou tubercules et/ou de racines, de préférence dans une proportion représentant de 5 à 45% en poids, avantageusement de 12% et 30%, ce qui présente l'avantage de répondre aux objectifs nutritionnels et de texture. De préférence, l'aliment selon l'invention comprend un mélange d'une ou plusieurs poudres de légumineuses, d'une ou plusieurs farines de céréales et d'une ou plusieurs poudres de tubercules et/ou de racines. Un tel aliment répond encore plus favorablement aux objectifs nutritionnels car il apporte l'ensemble des acides aminés essentiels.

Les pourcentages en poids des ingrédients de l'aliment selon l'invention se rapportent au poids total dudit aliment thérapeutique.

Le terme « poudre », au sens de la présente invention, désigne une substance solide, finement broyée, pilée ou pulvérisée, provenant d'un ou plusieurs tubercules et/ou racines et/ou légumineuses. Il peut également s'agir du produit de la déshydratation du lait ou d'un produit laitier, de la déshydratation et l'extraction des protéines d'un ou plusieurs aliments. Le terme « farine », au sens de la présente invention, désigne quant à lui une « poudre » provenant de la mouture des grains d'une ou plusieurs céréales.

De préférence, dans l'aliment selon l'invention, la portion d'une ou plusieurs céréales varie de 0%, dans les modes de réalisation de l'aliment qui n'en comprenant pas, à 20% en poids dans les autres modes de réalisation. De préférence, cette proportion varie entre 2 et 15% en poids, avantageusement entre 5 et 15% en poids.

La portion d'une ou plusieurs légumineuses varie de 0%, dans les modes de réalisation de l'aliment qui n'en comprenant pas, à 20% en poids dans les autres modes de réalisation. De préférence, cette proportion varie entre 2 et 15% en poids, avantageusement entre 5 et 15% en poids.

La portion d'une ou plusieurs tubercules et/ou racines varie de 0%, dans les modes de réalisation de l'aliment qui n'en comprenant pas, à 20% en poids dans les autres modes de réalisation. De préférence, cette proportion varie entre 2 et 15% en poids, avantageusement entre 5 et 15% en poids.

Il est entendu que les pourcentages des portions d'une ou plusieurs céréales, d'une ou plusieurs légumineuses, d'une ou plusieurs tubercules et/ou racines, ne peuvent pas être de 0% en même temps.

De préférence, une dose d'aliment selon l'invention représente entre 90 et 100 g, ce qui correspondant en pratique à une quantité compatible avec les capacités gastriques des enfants malnutris. Ceux-ci ne peuvent pas ingérer quotidiennement plus de 30 g d'aliment par kg de poids corporel, d'où un peu plus de 200 g pour un enfant d'environ 7 kg, ce qui correspond à deux sachets pris dans une même journée.

De préférence, la matière grasse laitière animale ou d'origine animale de l'aliment selon l'invention comprend, ou est, toute matière grasse laitière répondant à la norme du Codex Alimentarius Codex Stan 280-1973 (Norme Codex pour les produits à base de matières grasses laitières).

La matière grasse laitière présente l'avantage de contenir peu d'acides gras *trans,* et s'avère être un composant très digeste. Par ailleurs, de tels acides gras *trans* présentent l'avantage d'être d'origine naturelle contrairement à ceux d'origine synthétique qui sont issus de procédés industriels comme par exemple l'hydrogénation des huiles végétales. De plus, si un risque accru d'événements cardiovasculaires est associé à la consommation d'acides gras *trans,* il est généralement admis qu'aucune augmentation du risque cardiovasculaire n'a pu être mise en évidence avec la consommation d'acides gras *trans* d'origine naturelle, aux niveaux de consommation actuellement constatés en France (Saisine n° 2007-SA-0220 : Avis sur l'estimation des apports en acides gras trans de la population française, AFSSA, 2009).

Contrairement à certaines huiles végétales, telles que l'huile de palme et l'huile de coco, qui sont solides à température ambiante et qui possèdent un goût trop prononcé pour une utilisation chez des enfants, la matière graisse laitière a pour avantage d'être sous une forme solide qui présente une texture lisse et homogène, jusqu'à des températures inférieures à 17°C, d'être sous forme liquide à partir de 32°C (+/- 2°C), température dite du point de goutte, et, entre cet intervalle de températures, d'être sous forme pâteuse.

Ces propriétés de la matière grasse laitière présentent un réel avantage. En effet, lorsque chauffée au cours du processus de fabrication de l'aliment selon l'invention, la matière grasse laitière se liquéfie, permettant l'obtention d'un mélange homogène avec la ou les poudres ou farines. Dans un second temps, lors du conditionnement, qui s'accompagne d'une diminution de température, sa solidification partielle permet de passer d'une forme liquide à une forme pâteuse, ce qui permet de conférer à l'aliment selon l'invention une texture pâteuse, qui présente l'avantage d'empêcher le déphasage du produit, d'assurer la bonne tenue de l'aliment en sachet tout en évitant l'écoulement lors de l'ouverture de celui-ci. De plus, lors de la prise alimentaire, le fait de tenir le sachet entre les mains et d'y administrer une pression (avec les mains) va suffire à provoquer l'écoulement de celui-ci.

La matière grasse laitière présente également l'avantage d'être stable à température ambiante, qui est la température de stockage de l'aliment selon l'invention, sur une période de conservation longue, par exemple 1 à 3 ans, une période de conservation qui est également fonction du procédé utilisé pour la confection l'aliment et de l'emballage utilisé. Outre le fait que la matière grasse laitière permette un apport de lipides, elle permet un apport limité en eau, conférant à l'aliment selon l'invention une stabilité microbiologique et une texture adaptée à la consommation par les enfants âgés d'environ 6 mois à environ 6 ans.

De plus, la matière grasse laitière possède un goût relativement neutre, ce qui présente un réel avantage par rapport aux autres graisses animales telles le saindoux ou l'huile de poisson. Elle ne présente pas de saveurs acides, amères, rances ou prononcées qui déplairaient aux enfants.

De préférence, la répartition des acides gras rentrant dans la composition de la matière grasse laitière est la suivante :
- acides gras saturés (entre 60 et 75% en poids),
- acides mono-insaturés (25 et 35% en poids),
- acides gras polyinsaturés (entre 5 et 15% en poids).

De préférence, la matière grasse laitière de l'aliment selon l'invention comprend, ou est constituée, d'huile de beurre, également appelé beurre concentré, ou « butter oil », ou d'huile de beurre anhydre, également appelé matière grasse laitière anhydre. Ce sont des produits gras obtenus exclusivement à partir de lait et/ou à partir de produits obtenus à partir du lait au moyen de procédés entraînant l'élimination quasi-totale de l'eau et de l'extrait sec non gras. Est exclu de la présente invention, le ghee, un beurre clarifié particulier, car possédant un goût et une structure très marquée.

La matière grasse laitière selon l'invention présente l'avantage d'être largement disponible et d'être avantageuse en termes d'apports nutritifs, tout en étant facilement ingérable et digeste, ayant peu ou pas d'intolérance ou d'effets secondaires suite à son ingestion.

L'huile de beurre anhydre est obtenue de préférence à partir de lait, avantageusement à partir de crème, qui comprend généralement 35 à 45% de matière grasse, ou bien à partir de beurre qui comprend de préférence au minimum 80% de matière grasse. Elle est obtenue en séparant l'eau de la matière sèche, de préférence par des procédés physiques de séparation, comme par exemple la centrifugation ou la décantation. On privilégiera les produits obtenus par la méthode directe par centrifugation car la teneur en matière grasse du produit ainsi obtenu y est plus élevée (99% contre 95% au maximum par méthode indirecte). Aucune substance neutralisante ou arôme n'est ajouté au produit ainsi obtenu. L'huile de beurre anhydre obtenue comprend de préférence environ 99,6% en poids de matière grasse.

L'huile de beurre anhydre présente l'avantage d'apporter des lipides et des acides gras, sources d'énergie qui sont aussi des éléments indispensables pour le corps humain, du fait du rôle fonctionnel qu'ils jouent au niveau des cellules.

De préférence, l'huile de beurre anhydre est obtenue à partir de la même matière première et par les mêmes procédés que ceux employés pour l'huile de beurre. Toutefois, elle se différencie de l'huile de beurre par son pourcentage de matière grasse laitière. Dans l'huile de beurre, celle-ci est d'environ 99,6% en poids alors que l'huile de beurre anhydre contient, quant à elle, 99,8% de son poids en matière grasse laitière.

L'aliment selon l'invention comprend en outre de la poudre de lait, ou « lait en poudre», fabriquée à partir de lait entier et/ou de lait demi-écrémé et/ou de lait écrémé.

L'aliment selon l'invention comprend du sucre, de préférence du saccharose, avantageusement du sucre cristallisé blanc, qui a un pouvoir sucrant élevé et est facilement disponible, à un prix raisonnable. De préférence, le sucre blanc cristallisé utilisé dans le cadre de la présente invention correspond au standard de qualité n°2 de la réglementation de l'Union Européenne.

En l'absence d'eau ajoutée dans l'aliment selon l'invention, outre l'humidité résiduelle des constituants dudit aliment, le sucre fond avec difficulté, par conséquent, le sucre utilisé comprend des grains de taille compatible avec la granulométrie des autres constituants de l'aliment selon l'invention. De préférence, le sucre cristallisé a une granulométrie inférieure à 0,5 mm, ou avantageusement, il s'agit, au moins pour une partie, de sucre glace dont la granulométrie est comprise entre 0,070 et 0,110 mm.

La présence de sucre influence l'osmolarité du produit fini. Ainsi, afin d'obtenir une osmolarité adéquate, pour ne pas augmenter le risque de diarrhées chez l'enfant, et donc se rapprocher de l'osmolarité du plasma, il est possible de remplacer tout ou partie du sucre cristallisé par de la maltodextrine. De par son poids moléculaire plus élevé que celui du sucre classique, la maltodextrine présente l'avantage d'obtenir une osmolarité plus faible.

De préférence, l'aliment selon l'invention comprend des protéines en poudre, obtenues, par exemple, par la déshydratation d'un ou plusieurs aliments et l'extraction de protéines qui le ou les constituent.

On entend par « protéines en poudres », les protéines ou isolat protéiques d'origine animale, tels que le lait ou l'oeuf, ou d'origine végétale, tel que le pois, à l'exclusion des protéines animales, telles que les farines de poissons ou de viandes.

De préférence, les protéines en poudre comprennent au moins 80% de protéines, une humidité inférieure à 5% et une granulométrie inférieure à 0,5 mm.

L'utilisation de protéines en poudre présente l'avantage de supplémenter l'aliment selon l'invention en protéines nécessaires au bon processus de ré-nutrition des populations cibles, en particulier lorsqu'il s'agit de protéines de pois ou d'oeuf.

Le traitement thermique qui intervient dans la fabrication de l'aliment selon l'invention détruit les facteurs anti-trypsiques du blanc d'oeuf. Les protéines du blanc d'oeuf à l'état cru sont en effet peu digestibles (51%) du fait de l'activité anti-trypsique de l'ovomucoïde.

Il est à noter que, comparées à l'ensemble des protéines animales et végétales, les protéines de l'oeuf cuit ont une digestibilité très élevée. De plus, leur composition en acides aminés essentiels est parfaitement adaptée aux besoins de l'homme, notamment grâce à une teneur élevée en lysine et acides aminés soufrés.

Du fait de cet équilibre quasi parfait, l'organisation mondiale de la santé a choisi l'oeuf entier comme source de protéines de référence pour l'enfant. L'indice de référence qui lui est attribué est 100, et est par conséquent légèrement supérieur à celui du lait de femme.

L'aliment selon l'invention peut comprendre des protéines végétales en poudre, par exemple des protéines de pois. Les protéines de pois sont obtenues à partir de pois jaunes (*Pisum sativum*), de la famille des légumineuses. Elles possèdent de nombreux avantages, parmi lesquels un très faible potentiel allergène, une excellente digestibilité, au environ de 75%, et sont riches en lysine (environ 6,15g/100g), comme les protéines d'oeuf.

De préférence, la ou les poudres et/ou farines de céréales et/ou légumineuses et/ou tubercules et/ou racines sont obtenues par le broyage, par tous moyens adéquats, d'un ou plusieurs céréales et/ou une ou plusieurs légumineuses et/ou une ou plusieurs tubercules et/ou racines, un broyage pouvant, de préférence, être précédé d'un traitement thermique ou d'un processus de déshydratation.

L'état pulvérulent de la ou des poudres et/ou farines présente l'avantage d'être moins sujet au développement des champignons responsables des mycotoxines du fait d'un faible taux d'humidité.

De préférence, cette ou ces poudres et/ou farines sont tamisées afin d'obtenir des particules dont la granulométrie ne dépasse pas 0,3 mm et se situer préférentiellement entre 0,15 à 0,25 mm. Une telle granulométrie permet d'assurer un mélange optimal des poudres et des farines entre elles, et surtout des poudres et/ou farines avec la matière grasse afin d'obtenir un produit homogène, sans risque de déphasage.

L'association de plusieurs poudres et/ou farines de céréales et/ou légumineuses et/ou tubercules et/ou racines présente l'avantage de fournir à l'aliment selon l'invention une haute valeur nutritive, notamment du fait de leurs qualités nutritionnelles respectives et de leurs propriétés digestives, mais également du fait que ces poudres et/ou farines se complètent avantageusement, notamment en ce qui concerne l'apport protéique. En effet, les protéines de légumineuses sont riches en lysine (en moyenne 7%), elles sont donc complémentaires aux protéines des céréales, dont la lysine est généralement l'acide aminé limitant - à savoir l'acide aminé essentiel trouvé en la plus faible quantité - (en moyenne 2%). Cependant, les protéines du pois présentent des déficiences en acides aminés soufrés (méthionine, cystéine et tryptophane), qui sont apportés dans l'aliment selon l'invention par les céréales.

Pour ce qui concerne la poudre de légumineuse, elle est fabriquée, de préférence, à partir de haricots mungo et/ou de lentilles et/ou de soja.

Les haricots mungo, également appelé soja vert, présentent l'avantage d'avoir une faible teneur en phytates et de ne pas contenir de gluten. Les phytates réduisent la biodisponibilité de certains minéraux qu'ils complexent en ions formant des sels insolubles. Compte tenu de la quantité pondérale de poudre de légumineuses dans l'aliment selon l'invention, la teneur en phytates est au final faible, et leur rôle antinutritionnel n'est pas problématique. Il en va de même pour les oligosaccharides de cette légumineuse, potentiellement responsables de flatulences, mais dont la fraction présente dans les haricots mungo est avant tout bénéfique pour la flore intestinale, la quantité ingérée étant en pratique trop réduite pour provoquer des flatulences. Par ailleurs, un seul inhibiteur d'enzyme, celui des protéases, qui réduit par conséquent l'efficacité du processus de digestion des protéines, est présent dans le haricot mungo.

De préférence, la poudre de haricots mungo est obtenue à partir de graines élimées (*Phaseolus aureus*), à savoir de graines débarrassées de leurs parties périphériques. Cela présente l'avantage de réduire, voire de supprimer, la quantité de tanins et polyphénols présents, des composés qui ont la particularité de se lier à certaines protéines et à certaines enzymes du tube digestif, avec la conséquence anti-nutritionnelle d'un effet négatif sur l'utilisation globale des protéines. Toutefois, leur présence est compensée, dans l'aliment selon l'invention, par un équilibrage en protéines car leur présence est bénéfique du fait de leur fonction anti-oxydante. Les facteurs anti-trypsiques, dont l'activité anti-enzyme, ciblée sur le pancréas, bloquent la digestion des protéines, sont détruits, quant à eux, par la chaleur lors du chauffage de la poudre de haricots mungo au cours de la fabrication de l'aliment selon l'invention.

De préférence, la poudre de lentilles est obtenue à partir de graines de lentilles broyées et traitées thermiquement. La poudre ainsi obtenue présente l'avantage de ne pas contenir de gluten mais est une excellente source de protéines (30%) et de fer (9,8mg/100g).

De préférence, la poudre de soja est obtenue à partir de graines de soja. Les graines parvenues à maturité sont triées, nettoyées et décortiquées. Le décorticage des graines de soja permet d'éliminer les pellicules qui sont trop riches en fibres. Dans un second temps, des procédés de torréfaction et de broyage permettent d'obtenir de la poudre de soja. Comme pour les autres farines et poudres, un traitement thermique adapté permet d'assurer la qualité microbiologique de la farine et d'éliminer les facteurs antinutritionnels thermosensibles tels les facteurs anti-trypsiques qui limitent la digestibilité des protéines. La poudre de soja utilisée peut être dégraissée ou non. Elle contient plus de 30% de son poids en protéines.

De préférence, la farine de céréales est obtenue à partir de riz et/ou de sorgho et/ou de mil, qui présentent l'avantage de ne pas contenir de gluten.

Le riz présente également l'avantage d'être disponibilité à proximité, ou dans, de nombreuses zones dont les populations souffrent de malnutrition, en particulier en Asie. De toutes les céréales de base dans l'alimentation humaine, c'est le riz qui a la plus forte digestibilité des protéines ainsi qu'en énergie ; cela étant probablement dû en partie à sa faible teneur en fibres alimentaires et en tanins. Les facteurs antinutritionnels présents au sein des grains de riz présentent l'avantage d'être dénaturés à la chaleur, tels que les inhibiteurs de la trypsine, l'oryzacystatine et l'hémagglutinine. Si seuls les phytates ne sont pas détruits par un traitement thermique, toutefois environ 80% se trouve dans le péricarpe, qui est de préférence éliminé au cours de la confection de la farine de riz.

Concernant le sorgho, même si cette plante contient de la durrhine, un glycoside cyanogène toxique localisé au niveau des feuilles dans la plante jeune, cette toxine perd sa toxicité au séchage. Ainsi, la farine provenant des graines de sorgho ne comprend pas, ou comprend de faibles quantités, d'alcaloïdes.

Comme pour le haricot mungo, les graines de sorgho sont élimées lors de la fabrication de la farine, et il perd environ 45% de son phosphore, dont 80% se présente sous forme d'acide phytique. Ainsi, la teneur en phytates dans la farine de sorgho est au final bien inférieure au seuil officiellement recommandé, et encore réduite par le traitement thermique que constitue le chauffage auquel la farine de sorgho est soumise dans le cadre du procédé de fabrication de l'aliment selon l'invention. Le sorgho contient par ailleurs des inhibiteurs de protéases et d'amylases, mais ces composés sont également thermosensibles, et donc dénaturés par l'étape de chauffage.

Les graines de sorgho comportent des tanins et des polyphénols, mais leur décorticage les en prive d'une fraction significative.

Enfin, le sorgho ne contient pas d'acide oxalique, et le traitement thermique de la poudre détruit les facteurs anti-trypsiques. De plus, il ne contient pas de gluten.

De préférence, la farine de mil est obtenue à partir de la mouture des graines de mil en fine poudre, un procédé au cours duquel le germe est, en grande partie, éliminé. Le mil présente l'avantage d'être un aliment commun dans les régions où sévit la malnutrition et dont le goût est habituel aux populations ciblées. La farine de mil contient au minimum 8% de protéines, une valeur sensiblement comparable à celles des autres farines de céréales potentiellement utilisables. La farine de mil présente l'avantage de ne pas contenir de gluten. Le décorticage des grains lors du procédé de fabrication de la farine et la thermisation de cette dernière permet d'éliminer une grande partie des facteurs antinutritionnels présents, à savoir principalement les tanins et phytates qui seraient susceptibles de diminuer la biodisponibilité des nutriments apportés.

La poudre de tubercules et/ou de racines est obtenue, de préférence, à partir de manioc, et/ou de patate douce, et/ou d'igname qui présentent l'avantage de ne pas contenir de gluten, et n'occasionnent donc pas les intolérances correspondantes.

On entend par « tubercule », les organes de stockage des plantes. Ils sont également le siège de la reproduction végétative. Ils peuvent être souterrain ou non. On entend par « racine », la partie souterraine de la plante qui la maintient au sol et qui l'alimente en eau et en sels minéraux. Dans de nombreux cas, la racine est l'organe de stockage, on parle alors de racine tubérisée. Seuls les racines et tubercules propres à la consommation humaine sont considérés.

De préférence, la poudre de manioc est obtenue à partir du manioc doux qui présente l'avantage de provoquer, lors de sa transformation moins d'acide cyanhydrique que le manioc amer. Les glucosides cyanogéniques du manioc doux étant de plus localisés principalement dans les parties externes du tubercule, ils sont plus facilement éliminables lors de la préparation des poudres. Le manioc contient, en tant qu'inhibiteurs d'enzymes, uniquement des inhibiteurs de protéases.

Les racines de manioc à partir desquelles la poudre de manioc est obtenue sont dépourvues de tanins et de polyphénols. Le manioc contient bien des acides oxaliques, mais en quantité telle que, rapportée à deux doses ensachées de l'aliment selon l'invention constituant la ration journalière d'un enfant dénutri, le seuil de toxicité n'est de loin pas atteint.

De préférence, la poudre de patate douce est obtenue par l'épluchage, le séchage (réduction de l'humidité de 70% à 12%) et le broyage des tubercules de patates douces.

De préférence, la poudre d'igname est obtenue à partir de tubercules d'igname qui sont épluchés, cuits et/ou séchés puis réduits en poudre.

De préférence, l'aliment selon l'invention peut comprendre en outre un ou plusieurs émulsifiants.

De préférence, le ou les émulsifiants représentent en poids entre 0 et 10% du poids total de l'aliment selon l'invention et présentent l'avantage de rendre homogène une solution comprenant des phases non miscibles ou difficilement miscibles. De préférence, le ou les émulsifiants sont choisis parmi les différents types de lécithines qu'elles soient extraites des graines de soja ou d'oeufs, qui sont les seuls émulsifiants naturels du marché. Les lécithines permettent d'améliorer l'apparence, la texture et la durée de vie du produit. 95% de la lécithine commercialisée provient du broyage des graines de soja. Pour des raisons évidentes de facilité d'approvisionnement, on privilégiera donc la lécithine de soja.

De préférence, l'aliment selon l'invention peut comprendre en outre des ingrédients supplémentaires, comme par exemple un ou plusieurs antioxydants, un mélange vitaminique, un mélange de minéraux, un mélange d'acides gras essentiels, un ou plusieurs arômes ou un mélange de ces composés.

De préférence, l'antioxydant est présent à un pourcentage en poids compris entre 0 et 3% Il présente l'avantage de protéger de l'oxydation, et donc de la dégradation, des autres composants de l'aliment selon l'invention, une oxydation, responsable du possible rancissement de l'aliment et de la possible apparition de radicaux libres. La présence d'un antioxydant permet, de façon plus spécifique, de protéger la matière grasse du rancissement et les vitamines, éventuellement présentes, de l'oxydation et donc de leur destruction. De préférence, l'antioxydant est du tocophérol, qui présente l'avantage d'être liposoluble, il peut être mélangé à la matière grasse animale ou d'origine animale, avant incorporation dans les poudres ou farines sèches. Dans un autre mode de réalisation de l'invention, l'antioxydant est du palmitate d'ascorbyle.

De préférence, le mélange vitaminique représente en poids entre 0 et 3% du poids total de l'aliment selon l'invention et présente l'avantage de compléter l'apport vitaminique des ingrédients de l'aliment et de pallier les pertes engendrées par le traitement thermique lors de la fabrication de l'aliment selon l'invention, permettant ainsi de couvrir les besoins vitaminiques de la population à traiter. De préférence, le mélange vitaminique comprend les vitamines suivantes : A, B1, B2, B3, B5, B6, B7, B8, B9, B12, C, D, E et K.

De préférence, le mélange de minéraux représente en poids entre 0 et 5% du poids total de l'aliment selon l'invention et présente l'avantage de compléter l'apport en minéraux des ingrédients de l'aliment selon l'invention pour permettre de couvrir les besoins en minéraux de la population à traiter. De préférence, le mélange de minéraux comprend du calcium, fer, zinc, iode, cuivre, sélénium, magnésium, manganèse et phosphore.

De préférence, le mélange d'acides gras essentiels représente en poids entre 0 et 3,9% du poids total de l'aliment selon l'invention et présente l'avantage de compléter et d'équilibrer l'apport nutritionnel en acides gras essentiels dans l'aliment selon l'invention. Ces acides gras sont dits essentiels car ils ne sont pas fabriqués par l'organisme et doivent en conséquent lui être fournis en intégralité par l'alimentation. De préférence, le mélange d'acides gras essentiels comprend un mélange d'huiles végétales dont les proportions mises en oeuvre permettent de répondre à l'objectif nutritionnel.

De préférence, le ou les arômes représentent en poids entre 0 et 3% du poids total de l'aliment selon l'invention et présentent l'avantage de d'agrémenter le goût de l'aliment selon l'invention. Il peut s'agir d'arômes naturels ou de synthèse. Il peut s'agir par exemple de l'arôme vanille ou caramel.

L'aliment selon l'invention ne comprend pas d'eau ajoutée, mais seulement l'eau provenant de l'humidité résiduelle des constituants l'aliment selon l'invention. De préférence, la quantité d'eau résiduelle dans l'aliment ne dépasse pas 2,5% en poids.

De préférence, l'aliment selon l'invention présente une viscosité telle que l'aliment ait une tenue dans son contenant à l'ouverture, par exemple dans un sachet, qu'il soit suffisamment fluide pour être facilement expulsable de son contenant, vers la bouche du consommateur, via par exemple une pression de la main, puis ingéré et dégluti par le consommateur, en particulier des enfants, le tout sans séparation de phase. Avantageusement, l'aliment selon l'invention se présente sous la forme d'une pâte épaisse.

De préférence, l'aliment selon l'invention présente une viscosité, mesurée à 37°C, comprise entre 15 et 30 Pa.s, de préférence entre 18 et 24 Pa.s. Cette viscosité est obtenue par l'emploi conjugué de la matière grasse animale ou d'origine animale, de préférence de la matière grasse laitière, et de la ou des poudres ou farines selon l'invention, qu'il s'agisse de la poudre de lait, des protéines en poudre, et/ou des poudres et/ou farines végétales.

L'aliment selon l'invention a de préférence une osmolarité inférieure ou proche de l'osmolarité physiologique, qui se situe entre 280 et 300 mOsm/L dans le plasma sanguin. Ainsi, une osmolarité inférieure ou égale à 290 mOsm/L présente l'avantage de ne pas induire de diarrhée chez le sujet consommant l'aliment selon l'invention, en particulier chez un jeune sujet, en particulier mal nourri. Avantageusement, l'osmolarité de l'aliment thérapeutique selon l'invention est d'environ 190 mOsm/L.

L'aliment selon l'invention est dépourvu de sel, sa teneur en eau est faible, la proportion de sucre ne dépasse pas 30% à 45% de l'énergie totale apportée par la consommation d'un sachet de l'aliment selon l'invention, et il ne nécessite aucune dilution avant consommation, d'où une osmolarité maîtrisée, en tout état de cause inférieure à celle du plasma sanguin.

Il est à noter que l'amidon qui se trouve dans la ou les farines de céréales, dans la ou les poudres de légumineuses et/ou de tubercules et/ou racines, qui est à la fois une source de glucides et utile pour ses propriétés épaississantes, liantes et stabilisantes, est un mélange d'amilose et d'amilopectine. La digestion de l'amidon est d'autant plus facile que la proportion d'amilopectine est importante et celle d'amilose faible. C'est la raison pour laquelle les poudres de manioc et de haricots mungo ainsi que la farine de riz sont de préférence utilisées, dans la mesure où elles présentent toutes entre 70 et 80% d'amilopectine et entre 20 et 30% d'amilose.

Par ailleurs, le mode de réalisation dans lequel l'aliment selon l'invention comprend un mélange de farines et poudres de céréales, racines, tubercules et légumineuses, présentent l'avantage d'un apport en protéines compris entre 10 et 12% de l'énergie totale de l'aliment selon l'invention. De plus, les teneurs en acides aminés essentiels, présents dans les protéines en poudre, le lait écrémé en poudre et la farine de riz, les poudres de haricots mungo, de manioc, excèdent les besoins d'un enfant de 6 mois à 6 ans souffrant de malnutrition tels qu'ils apparaissent dans les recommandations officielles.

Ces acides aminés essentiels, en d'autres termes indispensables, doivent être simultanément présents en quantité suffisante quand s'effectue la synthèse protéique. Il s'agit des acides aminés suivants : Valine, Leucine, Isoleucine, Méthionine, Thréonine, Lysine, Phénylalanine, Tryptophane et Histidine. Les besoins journaliers (seuil minimal journalier théorique) d'un enfant d'environ 18 kg, poids moyen d'un enfant de 5 ans, en chacun de ces acides aminés sont considérés comme étant les suivants en mg:
- Valine : 378
- Leucine : 810
- Isoleucine : 378
- Méthionine (+ Cystine) : 306
- Thréonine : 342
- Lysine : 630
- Phénylalaline (+ Tyrosine) : 576
- Tryptophane : 90
- Histidine : 234.

Dans le mode de réalisation de l'aliment selon l'invention, basé sur de la poudre de haricots mungo, de la farine de sorgho et de la poudre de manioc, les apports en acides aminés essentiels sont de l'ordre de :
- Valine : 910 mg/100g d'aliment
- Leucine : 1390 mg/100g d'aliment
- Isoleucine : 770 mg/100g d'aliment
- Méthionine (+ Cystine) : 550 mg/100g d'aliment
- Thréonine : 710 mg/100g d'aliment
- Lysine : 840 mg/100g d'aliment
- Phénylalaline (+ Tyrosine) : 1160 mg/100g d'aliment
- Tryptophane : 160 mg/100g d'aliment
- Histidine : 320 mg/100g d'aliment

Les apports en acides aminés des légumineuses et des céréales sont complémentaires. Leur association permet d'obtenir un apport en acides aminés complet, améliorant ainsi la valeur protéique de l'alimentation. Il couvre par conséquent les besoins d'un enfant de 6 mois à 6 ans, avec un coefficient de sécurité très large qui tient compte du fait que les besoins en acides aminés essentiels augmentent en cas de stress, ce qui est très probablement le cas pour des enfants en situation de dénutrition sévère, et d'infections, qui ne sont pas rares dans cette hypothèse.

L'énergie fournie par dose ensachée de l'aliment selon l'invention est supérieure à 500 kcal, l'aliment lui-même ne contenant pas plus de 2,5% de son poids en eau, ou ayant une activité de l'eau inférieure à 0,6, et étant stable vis-à-vis de l'oxydation. Il est à noter que les protéines y représentent de 12% à 15% de l'énergie totale. Les lipides représentent de 45% à 50% de cette énergie, et les glucides de 38% à 43%.

L'ensemble de ces caractéristiques conduit à un aliment complet, équilibré et compatible avec les exigences prescrites pour ce type d'aliments thérapeutiques prêts à l'emploi, adapté d'une part aux enfants souffrant de malnutrition aiguë sévère sans complication médicale et d'autre part aux contextes des zones touchées, avec les conditions hygiéniques, sociales et économiques parfois précaires qui y prévalent.

### Exemples

Les pourcentages exprimés dans les exemples ci-dessous sont donnés en poids par rapport au poids total de l'aliment selon l'invention.

### Exemple 1

- Poudre de haricots mungo : 6%;
- Farine de riz: 2%;
- Poudre de manioc : 5%;
- Lait écrémé en poudre : 22% ;
- Protéines de pois: 7%;
- Sucres : 24% ;
- Huile de beurre : 33%;
- Lécithine de soja : 1%.

### Exemple 2

- Poudre de lentilles : 2%
- Farine de sorgho : 16%
- Poudre de patate douce : 4%
- Lait écrémé en poudre : 27%
- Protéine de blanc d'oeuf : 6%
- Sucre : 14%
- Huile de beurre anhydre : 30%
- Lécithine de soja: 1%

### Exemple 3

- Poudre de haricots mungo : 8%
- Farine de sorgho : 2%
- Poudre d'igname : 2%
- Lait demi-écrémé en poudre : 10%
- Blanc d'oeuf en poudre : 12%
- Sucre : 32%
- Huile de beurre : 30%
- Lécithine de soja : 2%
- Arôme : 2%

### Exemple 4

- Poudre de soja : 5%
- Farine de mil : 5%
- Poudre de manioc : 5%
- Lait écrémé en poudre : 35%
- Sucre : 20%
- Huile de beurre : 28%
- Lécithine de soja : 2%

### Exemple 5

- Poudre de lentilles : 6%
- Farine de riz : 6%
- Poudre d'igname : 20%
- Lait écrémé en poudre : 16%
- Protéine de pois en poudre : 7%
- Sucre : 10%
- Huile de beurre anhydre : 30%
- Lécithine de soja : 3%
- Arôme : 2%

### Exemple 6 :

- Poudre de soja : 3%
- Farine de sorgho : 3%
- Poudre d'igname : 3%
- Lait demi-écrémé en poudre : 19%
- Protéine de pois en poudre: 10%
- Sucre : 30%
- Huile de beurre anhydre : 22%
- Lécithine de soja : 10%

### Exemple 7 :

- Poudre de haricots mungo : 11%
- Farine de mil : 7%
- Poudre de patate douce : 8%
- Lait écrémé en poudre : 19%
- Protéine de pois: 6%
- Sucre : 14%
- Huile de beurre : 35%

### Exemple 8 :

- Poudre de soja : 6%
- Farine de riz : 20%
- Poudre de patate douce : 6%
- Lait écrémé en poudre : 16%
- Blanc d'oeuf en poudre : 8%
- Sucre : 10%
- Huile de beurre anhydre : 30%

### Exemple 9 :

- Poudre de soja : 20%
- Farine de mil : 3%
- Poudre de manioc : 3%
- Lait écrémé en poudre : 16%
- Blanc d'oeuf en poudre : 3%
- Sucre : 24%
- Huile de beurre : 28%

### Exemple 10 :

- Farine de sorgo : 18%
- Poudre de manioc : 18%
- Lait écrémé en poudre : 18%
- Protéine de pois : 7%
- Sucre : 10%
- Huile de beurre : 29%

### Exemple 11 :

- Poudre de soja : 15%
- Poudre de manioc : 15%
- Lait écrémé en poudre : 18%
- Protéine de pois : 4%
- Sucre : 19%
- Huile de beurre : 29%

### Exemple 12 :

- Poudre de lentilles : 16%
- Farine de riz: 16%
- Lait écrémé en poudre : 18%
- Blanc d'oeuf : 4%
- Sucre : 17%
- Huile de beurre : 29%

### Exemple 13 :

- Poudre de soja : 12%
- Farine de mil : 5%
- Poudre d'igname : 5%
- Lait entier en poudre : 35%
- Sucre : 28%
- Huile de beurre : 15%

### Exemple 14 :

- Poudre de soja : 5%
- Lait entier en poudre : 35%
- Sucre : 28%
- Huile de beurre : 30%
- Arôme : 1%

### Exemple 15 :

- Poudre de soja : 5%
- Lait écrémé en poudre : 35%
- Sucre : 28%
- Huile de beurre : 30%
- Arôme : 2%

### Exemple 16 :

- Farine de sorgho : 5%
- Lait écrémé en poudre : 35%
- Sucre : 28%
- Huile de beurre : 30%
- Blanc d'oeuf en poudre : 2%

### Exemple 17 :

- Poudre de patate douce: 5%
- Lait écrémé en poudre : 35%
- Sucre : 28%
- Huile de beurre : 30%
- Blanc d'oeuf en poudre : 2%

Le procédé de fabrication de l'aliment selon l'invention, comprend une étape de mélange des composants de l'aliment selon l'invention avant une étape de traitement thermique, ledit mélange étant chauffé à une température comprise entre 65 et 95°C pendant une durée de 5 à 30 minutes, avant d'être conditionné dans un contenant, par exemple un sachet hermétique. Cette gamme de température, en plus de l'absence d'eau libre dans l'aliment, présente l'avantage de permettre la conservation des protéines, les lipides et les sucres sous leur forme initiale. En effet, ces conditions de cuisson limitent les réactions de dénaturation des protéines ainsi que les réactions de Maillard et permettent l'enrobage quasi total et homogène des particules de poudres et farines dans la matière grasse laitière, favorisant l'obtention d'une texture pâteuse, lisse et homogène, sans durcissement du mélange, ni formation de grumeaux ou brunissement, permettant l'ingestion, sans mastication, de l'aliment selon l'invention par des enfants âgés de 6 mois à 6 ans souffrant de malnutrition aigüe sévère.

Par ailleurs, ce traitement thermique présente l'avantage de permettre une action pasteurisatrice sur les bactéries et moisissures, ainsi qu'une action de destruction des enzymes des facteurs anti-nutritionnels. De plus, la gamme de température en question présente l'avantage d'être suffisamment basse pour permettre de conserver au mieux les propriétés des vitamines. En effet, il est également important de prendre en compte que certaines vitamines risqueraient de perdre leurs propriétés si le traitement thermique était trop élevé.

D'autre part, le procédé de fabrication selon l'invention présente l'avantage d'utiliser un matériel courant et polyvalent en agro-alimentaire, généralement disponible pour une production locale dans les zones les plus touchées par la malnutrition, et ne nécessite pas un investissement important dans du matériel perfectionné. De plus, ce procédé de fabrication fait appel à des technologies simples (chauffage, mélange) qui sont des procédés classiques d'agroalimentaire et qui sont facilement maîtrisables localement.

Afin d'améliorer la digestibilité de l'amidon qu'elles contiennent, les farines et/ou poudres, seules - à savoir sans la présence de la matière grasse laitière -, peuvent être préalablement chauffées à une température comprise entre 70°C et 100°C, pendant une durée comprise entre 2 et 10 minutes, après, de préférence, avoir été tamisées et mélangées. Cela provoque une dégradation partielle de l'amidon, et le rend plus digeste. Le chauffage rend également le produit plus savoureux.

Les traitements thermiques mis en oeuvre permettent de façon générale une meilleure conservation, une réduction de la charge bactérienne et des moisissures responsables de la production de mycotoxines ainsi qu'une destruction des facteurs antinutritionnels thermolabiles, comme les glucosides cyanogéniques, les inhibiteurs des protéases et des amylases, les tanins autres que condensés et les polyphénols, les facteurs anti-trypsiques.

Ces traitements peuvent cependant également occasionner des pertes en macro et micro nutriments, d'autant plus importantes que le chauffage est long et à haute température. Les intervalles de valeurs de températures sélectionnés dans le cadre de l'invention offrent cependant un compromis satisfaisant, permettant à l'aliment selon l'invention d'avoir un apport nutritif adéquat.

De préférence, les étapes suivantes sont mises en oeuvre pour obtenir le mélange des ingrédients à chauffer :
- tamiser éventuellement, et mélanger la ou les farines et/ou poudres dans un broyeur ou un mélangeur chauffant,
- ajouter le sucre, le lait en poudre et éventuellement les protéines en poudres et/ou le complexe multivitaminé et minéral et/ou l'émulsifiant afin d'obtenir un pré-mix,
- mélanger ledit pré-mix de 4 à 6 minutes,
- éventuellement mélanger à part la matière grasse laitière et le ou les antioxydants,
- ajouter dans le broyeur ou le mélangeur chauffant la matière grasse laitière, comprenant éventuellement le ou les antioxydants, de préférence préalablement mélangé avec ladite matière grasse laitière,
- ajouter éventuellement un ou plusieurs arômes.

## Revendications

1. Aliment pour son utilisation en thérapie, prêt à l'emploi, et ne nécessitant aucune dilution avant consommation, comprenant, en pourcentages pondéraux par rapport au poids total dudit aliment, 5 à 45% d'une farine d'une ou plusieurs céréales et/ou d'une poudre d'une ou plusieurs légumineuses et/ou une ou plusieurs tubercules et/ou une ou plusieurs racines, 10 à 35% de lait en poudre, 10 à 30% de sucre, 15 à 35% de matière grasse laitière animale ou d'origine animale, 0 à 20% de protéines en poudre, 0 à 10% d'un ou plusieurs émulsifiants.

2. Aliment pour l'utilisation selon la revendication 1, dans lequel la farine d'une ou plusieurs céréales varie de 0 à 20%, la poudre d'une ou plusieurs légumineuses varie de 0 à 20% et la poudre d'un ou plusieurs tubercules et/ou racines varie de 0 à 20%.

3. Aliment pour l'utilisation selon l'une quelconque des revendications précédentes, dans lequel la farine d'une ou plusieurs céréales représente entre 2 à 15%, la poudre d'une ou plusieurs légumineuses représente entre 2 à 15%, la poudre d'un ou plusieurs tubercules et/ou racines représente entre 2 à 15%.

4. Aliment pour l'utilisation selon l'une des revendications précédentes, dans lequel la poudre de légumineuses est obtenue à partir de haricots mungo et/ou de lentilles et/ou de soja.

5. Aliment pour l'utilisation selon l'une des revendications précédentes, dans lequel la farine de céréales est obtenue à partir de riz et/ou de sorgho et/ou de mil.

6. Aliment pour l'utilisation selon l'une des revendications précédentes, dans lequel la poudre de tubercules et/ou racines est obtenue à partir de manioc et/ou de patate douce et/ou d'igname.

7. Aliment pour l'utilisation selon l'une quelconque des revendications précédentes, dans lequel la matière grasse laitière animale ou d'origine animale est, ou comprend, de l'huile de beurre ou de l'huile de beurre anhydre.

8. Aliment pour l'utilisation selon l'une quelconque des revendications précédentes, dans lequel la ou les farines et/ou poudres de céréales et/ou de légumineuses et/ou de tubercules et/ou de racines ont une granulométrie ne dépassant pas 0,3 mm, de préférence une granulométrie se situant entre 0,15 à 0,25 mm.

9. Aliment pour l'utilisation selon l'une des revendications précédentes, dans lequel le sucre est du saccharose ayant une granulométrie inférieure à 0,5 mm, de préférence une granulométrie est comprise entre 0,070 et 0,110 mm.

10. Aliment pour l'utilisation selon l'une des revendications précédentes, dans lequel tout ou partie du sucre est remplacée par de la maltodextrine.

11. Aliment pour l'utilisation selon l'une quelconque des revendications précédentes, comprenant en outre un ou plusieurs antioxydants, un mélange vitaminique, un mélange de minéraux, un mélange d'acides gras essentiels, un ou plusieurs arômes, ou un mélange de ces composés.

12. Aliment pour l'utilisation selon l'une quelconque des revendications précédentes, ayant une viscosité, mesurée à 37°C, comprise entre 15 et 30 Pa.s, de préférence entre 18 et 24 Pa.s.

13. Aliment pour l'utilisation selon l'une quelconque des revendications précédentes dans laquelle la thérapie est le traitement et/ou la prévention de la malnutrition et/ou des états de malabsorption et autres affections nécessitant un enrichissement en énergie et protéines.

14. Procédé de fabrication d'un aliment prêt à l'emploi pour l'utilisation selon les revendications précédentes, comprenant une étape de mélange des composants dudit aliment, tels que définis dans l'une quelconque des revendications précédentes, avant une étape de chauffage dudit mélange à une température comprise entre 65 et 95°C pendant une durée de 5 à 30 minutes, puis une étape de conditionnement dudit mélange dans un emballage.

15. Procédé de fabrication selon la revendication 14, dans lequel la ou les farines de céréales et/ou poudres d'une ou plusieurs légumineuses et/ou tubercules et/ou racines sont chauffées, préalablement à leur mélange, à une température comprise entre 70°C à 100°C pendant une durée d'environ 2 à 10 min, après avoir été tamisées et mélangées.

16. Procédé de fabrication selon l'une des revendications 14 ou 15, dans lequel l'étape de mélange des composants de l'aliment comprend les étapes suivantes :
- mélanger la ou les farines et/ou poudres dans un broyeur ou un mélangeur chauffant,
- ajouter, à ladite ou lesdites farines et/ou poudres, le sucre, le lait en poudre, et éventuellement les protéines en poudre et/ou le complexe multivitaminé et minéral et/ou l'émulsifiant, afin d'obtenir un pré-mix,
- mélanger ledit pré-mix de 4 à 6 min
- mélanger à part la matière grasse laitière animale ou d'origine animale et éventuellement le ou les antioxydants,
- ajouter dans le broyeur ou le mélangeur chauffant la matière grasse laitière, comprenant éventuellement le ou les antioxydants,
- ajouter éventuellement un ou plusieurs arômes.

## Patentansprüche

1. Fertignahrungsmittel zum therapeutischen Verwendung, das vor dem Verwendung keiner Verdünnung bedarf, umfassend, jeweils bezogen auf das Gesamtgewicht des Nahrungsmittels, zu 5 - 45 Gew. % Mehl aus mindestens einer Getreideart und/oder Pulvers aus mindestens einer Hülsenfrucht und/oder mindestens einer Knolle und/oder mindestens einer Wurzel, zu 10 - 35 Gew. % Pulvermilch, zu 10 - 30 Gew. % Zucker, zu 15 - 35 Gew. % tierisches Milchfett oder Milchfett tierischen Ursprungs, zu 0 - 20 Gew. % Proteine in Pulverform und zu 0 - 10 Gew. % mindestens einen Emulgator.

2. Nahrungsmittel zur Verwendung nach Anspruch 1, wobei der Mehl aus mindestens einer Getreideart im Bereich von 0 - 20 % liegt, das Pulver aus mindestens einer Hülsenfrucht im Bereich von 0 - 20 % liegt und das Pulver aus mindestens einer Knolle und/oder Wurzel im Bereich von 0 - 20 % liegt.

3. Nahrungsmittel zur Verwendung nach einem der vorstehenden Ansprüche, wobei der Mehl aus mindestens einer Getreideart im Bereich von 2 - 15% liegt, das Pulver aus mindestens einer Hülsenfrucht im Bereich von 2 - 15% liegt und das Pulver aus mindestens einer Knolle und/oder Wurzel im Bereich von 2 - 15% liegt.

4. Nahrungsmittel zur Verwendung nach einem der vorstehenden Ansprüche, wobei das Hülsenfruchtpulver aus Mungobohnen und/oder Linsen und/oder Soja hergestellt ist.

5. Nahrungsmittel zur Verwendung nach einem der vorstehenden Ansprüche, wobei der Gedreidemehl aus Reis und/oder Sorghum und/oder Hirse hergestellt ist.

6. Nahrungsmittel zur Verwendung nach einem der vorstehenden Ansprüche, wobei das Knollen- und/oder Wurzelpulver aus Maniok und/oder Süßkartoffel hergestellt ist.

7. Nahrungsmittel zur Verwendung nach einem der vorstehenden Ansprüche, wobei das tierische Milchfett bzw. das Milchfett tierischen Ursprungs Butteröl oder wasserfreies Butteröl ist oder dieses umfasst.

8. Nahrungsmittel zur Verwendung nach einem der vorstehenden Ansprüche, wobei der mindestens eine Getreidemehl und/oder das mindestens eine Getreide- und/oder Hülsenfrucht- und/oder Knollen- und/oder Wurzelpulver eine Korngröße von höchstens 0,3 mm, vorzugsweise zwischen 0,15 und 0,25 mm aufweist.

9. Nahrungsmittel zur Verwendung nach einem der vorstehenden Ansprüche, wobei der Zucker Saccharose mit einer Korngröße kleiner 0,5 mm, vorzugsweise zwischen 0,070 und 0,110 mm, ist.

10. Nahrungsmittel zur Verwendung nach einem der vorstehenden Ansprüche, wobei der Zucker ganz oder teilweise durch Maltodextrin ersetzt ist.

11. Nahrungsmittel zur Verwendung nach einem der vorstehenden Ansprüche, ferner umfassend mindestens ein Antioxidans, eine Vitaminmischung, eine Mineralstoffmischung, eine Mischung aus essentiellen Fettsäuren, mindestens einen Aromastoff oder eine Mischung davon.

12. Nahrungsmittel zur Verwendung nach einem der vorstehenden Ansprüche mit einer bei 37 °C gemessenen Viskosität zwischen 15 und 30 Pa.s, vorzugsweise zwischen 18 und 24 Pa.s.

13. Nahrungsmittel zur Verwendung nach einem der vorstehenden Ansprüche, wobei es sich bei der Therapie um die Behandlung und/oder Verhütung der Unterernährung und/oder von Malabsorptionszustände sowie anderen Erkrankungen, die einer Energie- und Proteinanreichung bedürfen.

14. Verfahren zur Herstellung eines Nahrungsmittels zur Verwendung nach einem der vorstehenden Ansprüche, umfassend einen Schritt des Mischens der nach einem der vorstehenden Ansprüche definierten Inhaltsstoffe des Nahrungsmittels, gefolgt durch einen Schritt des Erwärmens der Mischung auf eine Temperatur zwischen 65 und 95 °C über 5 - 30 Minuten, gefolgt durch einen Schritt des Verpackens der Mischung in einer Packung.

15. Verfahren nach Anspruch 14, wobei der mindestens eine Getreidemehl und/oder das mindestens eine Pulver aus mindestens einer Hülsenfrucht und/oder Knolle und/oder Wurzel vor dem Mischen und nach dem Sieben und Mischen auf eine Temperatur zwischen 70 und 100 °C über etwa 2 - 10 min erwärmt wird.

16. Verfahren nach einem der Ansprüche 14 oder 15, wobei der Schritt des Mischen der Inhaltsstoffe des Nahrungsmittels folgende Schritte umfasst:
- Mischen des mindestens einen Mehls und/oder Pulvers in einer Mühle oder einem heizenden Mischer,
- Hinzugeben des Zuckers, Pulvermichs und ggf. des Proteinpulvers und/oder des Multivitamin- und Mineralstoffkomplexes und/oder des Emulgators zu dem mindestens einen Mehl und/oder Pulver, um eine Vormischung zu erzeugen,
- Mischen der Vormischung über 4 - 6 min,
- getrenntes Mischen des tierischen Milchfetts bzw. des Milchfetts tierischen Ursprungs und ggf. des mindestens einen Antioxidans,
- Hinzugeben des Milchfetts, das ggf. das mindestens eine Antioxidans umfasst, zur Mühle bzw. zum heizenden Mischer,
- ggf. Hinzugeben mindestens eines Aromastoffs.

## Claims

1. Food product for its use in therapy, ready to use, and not requiring any dilution before consumption, comprising, in weight percentages based on the total weight of said foodstuff, 5 to 45% of a flour of one or several cereals and/or of a powder of one or several legumes and/or one or several tubercles and/or one or several roots, 10 to 35% of powdered milk, 10 to 30% of sugar, 15 to 35% of animal milk fat or of animal origin, 0 to 20% of proteins in powder, 0 to 10% of one or several emulsifiers.

2. Food product for the use according to claim 1, wherein the flour of one or several cereals ranges from 0 to 20%, the powder of one or several legumes ranges from 0 to 20% and the powder of one or several tubercles and/or roots ranges from 0 to 20%.

3. Food product for the use according to any of the preceding claims, wherein the flour of one or several cereals represents between 2 to 15%, the powder of one or several legumes represents between 2 to 15%, the powder of one or several tubercles and/or roots represents between 2 to 15%,

4. Food product for the use according to one of the preceding claims, wherein the legume powder is obtained from mungo beans and/or lentils and/or soya beans.

5. Food product for the use according to one of the preceding claims, wherein the cereal flour is obtained from rice and/or sorghum and/or millet.

6. Food product for the use according to any of the preceding claims, wherein the powder of one or several tubercles and/or roots is obtained from manioc and/or sweet potato and/or yam.

7. Food product for the use according to any of the preceding claims, wherein the animal milk fat or of animal origin is, or comprises butter oil or anhydrous butter oil.

8. Food product for the use according to any of the preceding claims, wherein the flour(s) and/or powders of cereals and/or of legumes and/or of tubercles and/or roots have a grain size not exceeding 0.3 mm, preferably a grain size located between 0.15 to 0.25 mm.

9. Food product for the use according to one of the preceding claims, wherein the sugar is saccharose having a grain size of less than 0.5 mm, preferably a grain size is comprised between 0.070 and 0;110 mm.

10. Food product for the use according to one of the preceding claims, wherein all or part of the sugar is replaced with maltodextrin.

11. Food product for the use according to any of the preceding claims, further comprising one or several anti-oxidants, a vitamin mixture, a mineral mixture, a mixture of essential fatty acids, one or several flavors, or a mixture of these compounds,

12. Food product for the use according to any of the preceding claims, having a viscosity, measured at 37°C, comprised between 15 and 30 Pa.s, preferably between 18 and 24 Pa.s.

13. Food product for the use according to one of the preceding claims, wherein the therapy is the treatment and/or the prevention of malnutrition and/or malabsorption conditions and other affections requiring enrichment in energy and in proteins.

14. Process for manufacturing a ready-to-use food product for the use according to the preceding claims, comprising a step of mixing the components of said food product, as defined in any of the preceding claims, before a step for heating said mixture to a temperature comprised between 65 and 95°C for a period of 5 to 30 minutes, and then a step for conditioning said mixture in a package.

15. The manufacturing process according to claim 14, wherein the flour(s) of cereals and/or powders of one or several legumes and/or tubercles and/or roots are heated prior to their mixing, to a temperature comprised between 70 and 100°C for a period from about 2 to 10 minutes, after having been sieved and mixed.

16. The manufacturing process according to one of claims 14 or 15, wherein the step of mixing the components of the food product comprises the following steps:
- mixing the flour(s) and/or powders in a milling machine or heating mixer,
- adding to said flour(s) and/or powders, the milk, the powdered milk, and optionally the proteins in powder and/or the multivitamin and mineral complex and/or the emulsifier, in order to obtain a pre-mix,
- mixing said pre-mix for 4 to 6 mins,
- mixing separately the animal milk fat or of animal origin and optionally the antioxidant(s),
- adding into the milling machine or the heating mixer the milk fat, optionally comprising the anti-oxidant(s),
- optionally adding one or several flavors.
